# EUROPÄISCHE PATENTSCHRIFT

(11) **EP 0 487 759 B1**
(45) Veröffentlichungstag und Bekanntmachung des Hinweises auf die Patenterteilung: **26.04.1995**
(21) Anmeldenummer: 90122557.3
(22) Anmeldetag: 26.11.1990
(51) Int. Cl.: H02H 11/00, H04B 3/54

(54) **Verpolschutz**
Reverse battery protection
Protection contre l'inversion des bornes de la batterie

(43) Veröffentlichungstag der Anmeldung: 03.06.1992
(73) Patentinhaber: SIEMENS AKTIENGESELLSCHAFT, 80333 München (DE)
(72) Erfinder: Zierhut, Hermann, Dipl.-Ing., W-8402 Netraubling (DE)

(56) Entgegenhaltungen:
- EP-A- 0 082 791
- EP-A- 0 259 845
- EP-A- 0 316 536
- EP-A- 0 349 836
- EP-A- 0 379 902
- CH-A- 643 095

## Beschreibung

Die Erfindung betrifft eine Schaltungsanordnung zur Ankopplung einer elektrischen Schaltung an einen ein elektrisches Signal führenden Leiter.

Beim Ankoppeln einer elektrischen Schaltung an einen ein elektrisches Signal führenden Leiter, beispielsweise an einen Leiter zur Stromversorgung, ist es bekannt, als Verpolschutz eine in Reihe geschaltete Diode vorzusehen. Bei wechselspannungsüberlagerten Busleitersystemen mit Gleichspannung ist eine derartige Ankopplung jedoch nicht möglich, da das Wechselsignal nur in einer Richtung übertragen würde. Daher wurde bisher am Spannungsversorgungseingang der elektrischen Schaltung parallel eine Diode geschaltet, die bei falscher Polarität der Spannungsversorgung die Eingangsklemmen der Schaltung kurzschließt und diese somit schützt. Diese Lösung hat jedoch zum Nachteil, daß die Spannungsversorgungsquelle kurzgeschlossen wird, und daß bei mehreren parallel geschalteten Verbrauchern ein erheblicher Suchaufwand zum Bestimmen der falsch gepolten Schaltung anfällt.

Der Erfindung liegt die Aufgabe zugrunde diese Nachteile zu verhindern.

Der Erfindung liegt die Erkenntnis zugrunde, daß bisher aus Einfachheitsgründen nur eine Diode verwendet wurde. Der Erfinder hat jedoch erkannt, daß hierin die Ursache für die obengenannten Nachteile liegen.

In der EP-A2-0 316 536 wurde auch schon eine verbesserte Lösung vorgeschlagen. Diese zeichnet sich jedoch durch eine sehr aufwendige Erfassungsschaltung mit Relais-Hilfskontakten für die Polarität aus. Zudem eignet sich die dortige Lösung nur für das Anschalten von Wechselspannungsübertragern.

Aus den europäischen Patenanmeldungen EP 0 259 845 und EP 0 349 836 sind Verpolschutzeinrichtungen für Gleichspannungsverbraucher bekannt, die jedoch keinen Lösungshinweis für die Problematik bei Busleitersystemen geben.

Die Aufgabe wird erfindungsgemäß durch die Schaltungsanordnung nach Anspruch 1 gelöst. Auf diese Weise wird mit nur geringem Aufwand eine wesentliche Verbesserung des Verpolschutzes erzielt.

Die Spannungsversorgung bricht bei falsch gepolter elektrischer Schaltung nicht zusammen. Richtig gepolte Schaltungen können daher weiter in Betrieb bleiben. Die Ankopplung ansich ist für Gleich- und Wechselsignale niederohmig ausgeführt.

Eine Anwendung des Verpolschutzes ist insbesondere bei der induktiven Ankopplung von Sende- und Empfangsschaltungen an Bussysteme gegeben, bei denen dem Gleichsignal ein Wechselsignal überlagert ist.

Eine bevorzugte Ausführung ist nach den Ansprüchen 2 und 4 gegeben. Diese Ausführung zeichnet sich durch ihren einfachen Aufbau und durch nur wenige Bauteile aus.

Mit Vorteil kann gemäß Anspruch 3 die Anzahl der Bauteile weiter verringert werden. Es ist auch günstig wenn gemäß Anspruch 5 die Ansteuerschaltung eine Softstarteinrichtung umfaßt. Auf diese Weise ist der Einschaltstrom der Schaltung begrenzbar, sodaß ein kurzschlußartiger Ladestrom eines Speicherkondensators vermieden wird. Weitere vorteilhafte Ausgestaltungen sind in den übrigen Ansprüchen angegeben.

Ausführungsbeispiele der Erfindung werden nachstehend anhand der Zeichnung näher erläutert. Es zeigen:
- FIG 1: eine Anordnung des Verpolschutzes,
- FIG 2: ein zweiter Verpolschutz mit Transistor als steuerbares Element, und
- FIG 3: einen Verpolschutz mit symmetrischem Doppel-Emitter-Transistor.

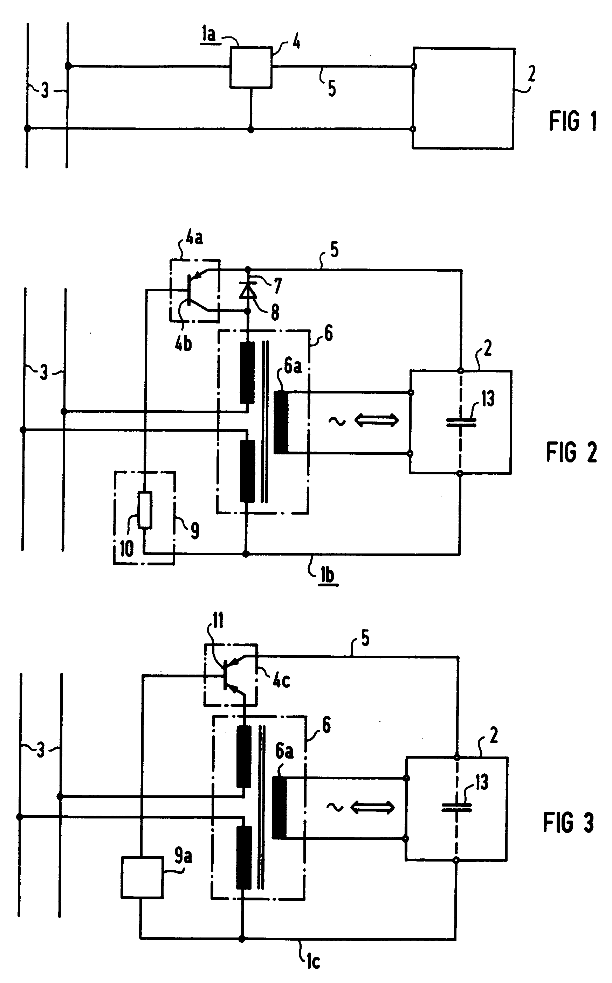

FIG 1 zeigt einen Verpolschutz 1a zur Ankopplung einer elektrischen Schaltung 2 an einen ein elektrisches Signal führenden Leiter 3. Der Leiter 3 ist vorliegend als Leiterpaar ausgebildet. Sein elektrisches Signal ist dabei vorzugsweise als Gleichsignal ausgebildet, dem ein Wechselsignal überlagert sein kann.

Zur Ankopplung ist ein steuerbares Element 4 vorgesehen, das in einem Signalankopplungspfad 5 angeordnet ist. In Abhängigkeit von der Polarität des elektrischen Signals auf dem Leiter 3 wird der Signalankopplungspfad 5 von dem steuerbaren Element 4 gesperrt bzw. freigegeben. Dies hängt von der falschen bzw. richtigen Polung ab. Das steuerbare Element 4 erkennt und wertet die Polarität des elektrischen Signals aus, wodurch ein verbesserter Schutz gegen Verpolung gegeben ist. Dies ist wichtig um die Schaltung 2 und zu dieser zugehörige und an das Signal angeschlossene Bauelemente zu schützen.

FIG 2 zeigt einen Verpolschutz 1b in Anwendung bei einer elektrischen Schaltung 2, die über einen Wandler 6 an die Leiter 3 eines Bussystems angeschlossen ist. Die elektrische Schaltung 2 erhält vom Leiter 3 seine Versorgungsspannung, sowie ein Wechselsignal, das durch den Wandler 6 mit der Wicklung 6a übertragen wird. Die Schaltung 2 kann auch ein Wechselsignal auf den Bus senden.

Vorliegend ist das steuerbare Element 4a auf Halbleiterbasis als erster Transistor 4b aufgebaut, wobei dessen Kollekter-Emitter-Strecke im Signalankopplungspfad 5 liegt. Parallel zu dieser Strecke ist ein Parallelpfad 7 geschaltet, der ein Ventil 8 umfaßt. An die als Steuereingang dienende Basis des ersten Transistors 4b ist eine Ansteuerschaltung 9 gelegt. Diese umfaßt einen Vorwiderstand 10, der an die andere Phase des elektrischen Signals geführt ist. Der Transistor 4b und das Ventil 8 sind dabei derart parallel geschaltet, daß Wechselsignale unbeeinträchtigt durchgelassen werden, falls eine vorgegebene Polarität des elektrischen Signals anliegt. Diese Ausführung des Verpolschutzes 1b ist besonders einfach ausgeführt und gewährleistet dennoch ein hohes Maß an Sicherheit für die elektrische Schaltung 2 und für den Leiter 3.

Das Ventil 8 kann wahlweise von einem antiparallel geschalteten zweiten Transistor ersetzt werden, dessen Basis ebenfalls über eine Ansteuerschaltung angesteuert ist. Auf diese Weise ist eine völlig symmetrische Anordnung des Verpolschutzes 1b gegeben.

FIG 3 zeigt einen Verpolschutz 1c, der weiter vereinfacht ist. Als steuerbares Element 4c dient dabei ein Doppel-Emitter-Transitor 11, dessen Emitter-Strom in beide Richtungen gleichmäßig gesteuert werden kann. Auch hier ist die als Steuereingang dienende Basis des Doppel-Emitter-Transistors 11 an eine Ansteuerschaltung 9a gelegt.

Vorzugsweise kann die Ansteuerschaltung 9a eine Softstarteinrichtung umfassen. Auf diese Weise kann beim Anlegen des Gleichsignals an die Schaltung 2 die Höhe des Signals kontinuierlich erhöht bzw. begrenzt werden. Dadurch können kurzschlußartige Einschaltströme verhindert werden, die durch einen zu der elektrischen Schaltung zugehörigen Speicherkondensator 13 verursacht werden kann. Eine derartige Ausführung ist besonders für eine integrierte Schaltung geeignet.

## Patentansprüche

1. Schaltungsanordnung zur Ankopplung einer Sende- und/oder Empfangseinrichtung (2) an ein Busleitersystem (3), welches ein Gleichsignal zur Stromversorgung und ein überlagertes Wechselsignal führt,
- mit einem Wandler (6), der als Weiche für die Gleichstromversorgung und zur Wechselsignalübertragung für die Sende- und/oder Empfangseinrichtung (2) dient,
- mit einem Verpolschutz (1b,1c), der in Serie mit einer beide Signale führenden, als Signalkopplungspfad (5) dienenden Wicklung des Wandlers (6) geschaltet ist,
- wobei der Verpolschutz (1b,1c) ein steuerbares, als Halbleiter ausgebildetetes Element (4a,4c) umfaßt, dessen Steuereingang an eine Ansteuerschaltung (9,9a) gelegt ist
- und das Element (4a,4c) beim Anliegen einer vorgegebenen Polarität des Gleichsignals den Signalankopplungspfad (5) für das Gleich- und für das Wechselsignal sperrt bzw. freigibt.

2. Schaltungsanordnung nach Anspruch 1, wobei das Element (4a,4c) ein Transistor (4b) ist, dessen Kollektor-Emitter-Strecke im Signalankopplungspfad (5) liegt, zu der ein Parallelpfad (7) mit einem antiparallen Ventil (8) geschaltet ist.

3. Schaltungsanordnung nach Anspruch 1, wobei das Element (4c) ein symmetrischer Doppel-Emitter-Transistor (11) ist.

4. Schaltungsanordnung nach Anspruch 2 oder 3, wobei parallel zum Element (4a,4b,4c), gegebenenfalls anstatt des Ventils (8), ein antiparallelgeschalteter zweiter Transistor vorgesehen ist.

5. Schaltungsanordnung nach einem der Ansprüche 1 bis 4, wobei die Ansteuerschaltung (9,9a) eine Softstarteinrichtung umfaßt.

## Claims

1. Circuit arrangement for coupling a transmitting and/or receiving device (2) to a bus line system (3) which carries a d.c. signal for the power supply and a superimposed a.c. signal,
- having a transformer (6) which serves as a separating filter for the d.c. supply and serves for a.c. signal transmission for the transmitting and/or receiving device (2),
- having polarity reversal protection (1b, 1c) which is connected in series to a winding of the transformer (6), which winding carries both signals and serves as a signal coupling path (5),
- wherein the polarity reversal protection (1b, 1c) comprises a controllable element (4a, 4c) formed as a semi-conductor, the control input of which is connected to a drive circuit (9, 9a), and
- the element (4a, 4c) respectively blocks and frees the signal coupling path (5) for the d.c. signal and for the a.c. signal when a specified polarity of the d.c. signal is present.

2. Circuit arrangement according to claim 1, wherein the element (4a, 4c) is a transistor (4b) whose collector-emitter section is located in the signal coupling path (5), to which there is connected a parallel path (7) having an anti-parallel valve (8).

3. Circuit arrangement according to claim 1, wherein the element (4c) is a symmetrical double-emitter-transistor (11).

4. Circuit arrangement according to claim 2 or 3, wherein an anti-parallel-connected second transistor is provided parallel with the element (4a, 4b, 4c), possibly in place of the valve (8).

5. Circuit arrangement according to one of claims 1 to 4, wherein the drive circuit (9, 9a) comprises a soft start device.

## Revendications

1. Montage pour le couplage d'un dispositif émetteur et/ou récepteur (2) à un système de conducteur formant bus (3), qui véhicule un signal continu pour l'alimentation en courant et un signal alternatif superposé, comportant
- un transformateur (6), qui sert d'aiguillage pour l'alimentation en courant continu et la transmission du signal alternatif au dispositif d'émission et/ou de réception (2),
- un circuit (1b,1c) de protection contre une inversion de polarité, qui est branché en série avec un enroulement du transformateur (6), qui véhicule les deux signaux et est utilisé en tant que voie (5) de couplage du signal,
- le circuit (1b,1c) de protection contre une inversion de polarité comprenant un élément commandable (4a,4c) réalisé sous la forme d'un semiconducteur et dont l'entrée de commande est appliquée à un circuit de commande (9,9a),
- l'élément (4a,4c) bloque ou libère la voie (5) de couplage pour le signal continu et pour le signal alternatif, lors de l'application d'une polarité prédéterminée du signal continu.

2. Montage suivant la revendication 1, dans lequel l'élément (4a,4c) est un transistor (4b), dont la voie collecteur-émetteur est située dans la voie (5) de couplage du signal, une voie parallèle (7) comportant une valve antiparallèle (8) étant raccordée à la voie collecteur-émetteur.

3. Montage suivant la revendication 1, dans lequel l'élément (4c) est un transistor symétrique (11) à émetteur double.

4. Montage suivant la revendication 2 ou 3, dans lequel un second transistor branché selon un montage antiparallèle est prévu en parallèle avec l'élément (4a,4b,4c), éventuellement à la place de la valve (8).

5. Montage suivant l'une des revendications 1 à 4, dans lequel le circuit de commande (9,9a) comprend un dispositif de démarrage en douceur.
